# DEMANDE DE BREVET EUROPEEN

(11) **EP 3 034 143 A1**
(43) Date de publication de la demande: **22.06.2016**
(21) Numéro de dépôt: 15306849.9
(22) Date de dépôt: 23.11.2015
(51) Int. Cl.: B01D 3/14, B01J 8/04

(54) **PLATEAU DISTRIBUTEUR POUR COLONNE D'ECHANGE DE CHALEUR ET/OU DE MATIERE COMPRENANT DES MOYENS DE BULLAGE**

(30) Priorité: 19.12.2014 FR 1462948
(71) Demandeur: IFP Énergies nouvelles, 92852 Rueil-Malmaison Cedex (FR)
(72) Inventeur: HAROUN, Yacine, DAVIS, 95616 (US); ROYON-LEBEAUD, Aude, 69007 LYON (FR); RAYNAL, Ludovic, 69600 OULLINS (FR)

(57) **Abrégé**

L'invention concerne un plateau 2 collecteur/distributeur/échangeur de colonne d'échange de chaleur et/ou de matière entre un gaz et un liquide comprenant des moyens de passage du liquide 14 et des caissons 4 pour le passage du gaz auxquels sont attachés des moyens de bullage du gaz 15. Les moyens de bullage permettent de créer une zone d'émulsion sur la partie haute du plateau 2 distributeur/échangeur.

L'invention concerne également une colonne d'échange comprenant un tel plateau distributeur et l'utilisation d'une telle colonne.

## Description

La présente invention concerne le domaine des colonnes de contact gaz/liquide, et plus particulièrement les colonnes pour les unités de traitement de gaz, de captage du CO₂, de déshydratation, ou encore de distillation.

Les unités de traitement de gaz et/ou de captage du CO2 par lavage aux amines et/ou de distillation et/ou de déshydratation comprennent des colonnes d'échange de matière et/ou de chaleur entre un gaz et un liquide, il peut s'agir par exemple de colonne d'absorption et de régénération de fluides, liquide ou gazeux. Ces colonnes fonctionnent en écoulement gaz/liquide à contre-courant ou à co-courant.

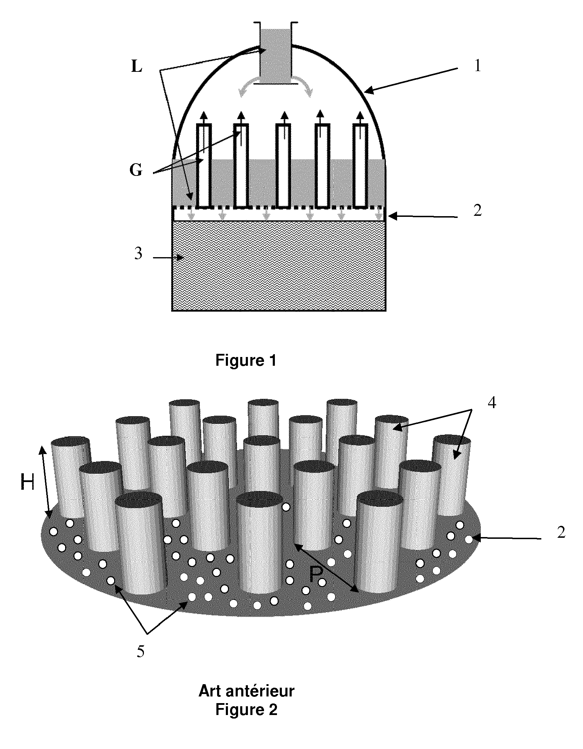

Les colonnes utilisées dans ces unités de traitement de gaz et/ou de captage de CO2 et/ou de distillation et/ou de déshydratation fonctionnent généralement sur le principe d'un échange de matière et/ou de chaleur entre le gaz et le fluide qui circulent dans les colonnes. La figure 1 représente un cas particulier d'une tête de colonne de traitement de gaz 1 équipée d'un plateau distributeur 2. Classiquement, cette colonne de traitement de gaz 1 comporte plusieurs sections 3 remplies par un contacteur, un plateau distributeur 2 est disposé au-dessus de chaque section 3. Le contacteur gaz/liquide met en contact le gaz G et le liquide L afin de permettre les échanges.

Par exemple, des distributeurs standards 2 utilisés dans les colonnes d'absorption/régénération ou encore de distillation sont généralement constitués d'un plateau collecteur/distributeur équipé de caissons 4 (appelés également cheminées) pour le passage du gaz à travers le plateau (cf. figure 2). La distribution du liquide se fait par le passage du liquide dans des orifices 5 positionnés sur le bas du plateau 2 et la distribution du gaz se fait par les caissons 4. Chaque caisson 4 permet le passage du gaz, selon le mode de fonctionnement contre-courant ou co-courant, de la partie basse de la colonne vers la partie haute de la colonne 1 ou bien de la partie haute vers la partie basse. Les caissons 4 sont en saillie d'un côté du plateau 2, et sont perpendiculaires à celui-ci. Chaque caisson 4 est formé de plusieurs parois, par exemple parallélépipédiques ou cylindriques qui délimitent un volume interne qui est ouvert de part et d'autre du plateau 2. Pour éviter que le liquide ne passe dans les caissons 4, l'ouverture d'échappement ou d'arrivée du gaz au-dessus du plateau (selon le mode de fonctionnement à contre-courant ou à co-courant), est préférentiellement recouverte par un chapeau (appelé également biseau). L'objectif du plateau distributeur est de distribuer le liquide L de manière homogène sur le contacteur gaz/liquide 3.

Afin d'optimiser les échanges entre le gaz et le liquide, de nombreux plateaux distributeurs ont été conçus. Ces plateaux distributeurs/collecteurs s'organisent principalement en deux grandes familles :
- systèmes distributeur/collecteur avec des cheminées, tels que décrits dans les demandes de brevet GB1169878A, US4808350A, US4472325A, US4427605A, US4839108A, FR2203659. Pour ce type de systèmes avec cheminées, la distribution du liquide se fait via des orifices situés sur le plateau ou via des cheminées de passage de liquide équipées d'orifices ou de fentes (cf. exemple de la figure 2), la distribution du gaz se fait par des cheminées de passage du gaz ou des caissons.
- systèmes avec des caissons distributeurs alimentés par une alimentation dédiée (système de collecte en amont ou alimentation intermédiaire) tels que décrits dans les demandes de brevets US4909967, US4816191, US4981265, DE2752391, WO8802647, FR2569129 ou distributeur/collecteur avec des caissons pour le passage du gaz tels que décrits dans les demandes de brevet US4689183, US5132055, US4432913.

Toutefois ces systèmes de distribution du liquide ne contribuent pas à l'échange de matière et/ou de chaleur dans la colonne et représentent donc une hauteur de la colonne, pour laquelle aucun échange entre les fluides est réalisé. Ainsi, ces systèmes de distribution représentent des « pertes de hauteur » au niveau de l'efficacité de colonne.

Par ailleurs, il existe dans l'art antérieur, des contacteurs de type plateaux d'échange. Ces plateaux permettent les échanges de chaleur et de matière entre les fluides, et sont empilés dans une colonne sans contacteur entre les plateaux. Ces plateaux n'ont pas de fonction de distribution.

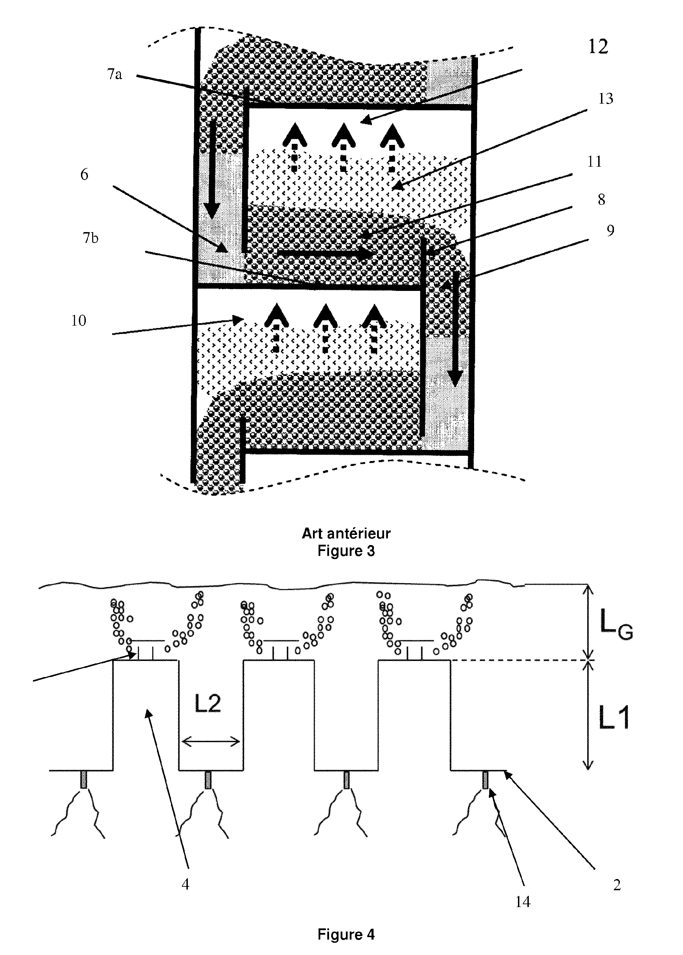

La figure 3 décrit le mode de fonctionnement d'un plateau d'échange usuel.

Le liquide s'écoule d'un plateau supérieur 7a vers un plateau inférieur 7b, en passant par un déversoir supérieur 6, puis le long de la zone d'échange sur le plateau 7b, pour passer au-dessus du barrage 8 vers le déversoir inférieur 9. Le gaz provenant du plateau inférieur 10 s'écoule à contre-courant dans la colonne à travers les clapets ou perforations (non représentés) situés sur le plateau 7b. Le gaz forme des bulles sur la zone d'échange 6 et se désengage du liquide dans les zones 12 et 13 pour passer au plateau supérieur 7a. Les déversoirs des plateaux contacteurs d'échange sont situés classiquement en périphérie du plateau pour les plateaux à une passe, mais peuvent être situés sur des sections centrales pour les plateaux multi-passes en fonction du diamètre de la colonne.

Il existe de nombreuses variantes pour les contacteurs de type plateaux. Un premier type est le plateau à clapets tel que décrit dans les demandes de brevet WO9924135A1, CA1253432A, US3399871 A. Un deuxième type est le plateau perforé tel qu'illustré dans les demandes de brevet US4504426A, US5213719A.

Toutefois une bonne distribution et une bonne répartition du liquide, notamment pour alimenter un contacteur (garnissage) ne sont pas assurées par un tel plateau d'échange. De tels plateaux ne peuvent être utilisés comme plateau distributeur.

L'invention concerne un plateau collecteur/distributeur/échangeur de colonne d'échange de chaleur et/ou de matière entre un gaz et un liquide comprenant des moyens de passage du liquide et des caissons pour le passage du gaz auxquels sont attachés des moyens de bullage du gaz. Les moyens de bullage permettent de créer une zone d'émulsion sur la partie haute du plateau distributeur/échangeur. Ainsi, le plateau distributeur/échangeur selon l'invention permet d'obtenir une augmentation des échanges de matière et/ou de chaleur entre les fluides tout en garantissant une bonne répartition du liquide.

### Le dispositif selon l'invention

L'invention concerne un plateau distributeur pour colonne d'échange de chaleur et/ou de matière entre un gaz et un liquide comportant au moins un caisson en saillie sur la partie supérieure dudit plateau pour le passage dudit gaz à travers ledit plateau et au moins un moyen pour le passage dudit liquide à travers ledit plateau. Ledit caisson comporte au moins un moyen de bullage dudit gaz.

Selon l'invention, ledit caisson est sensiblement parallélépipédique.

Selon un aspect de l'invention, ledit moyen de bullage comporte au moins un clapet et/ou une fente dudit caisson.

Avantageusement, ladite fente a sensiblement une forme rectangulaire.

Selon une variante de réalisation de l'invention, la direction longitudinale de ladite fente est sensiblement perpendiculaire à la direction longitudinale dudit caisson.

Alternativement, la direction longitudinale de ladite fente est sensiblement parallèle à la direction longitudinale dudit caisson.

Selon un mode de réalisation, ladite fente est recouverte d'un chapeau.

Selon une caractéristique de l'invention, ledit clapet est sensiblement rectangulaire.

Selon une alternative, ledit clapet est sensiblement cylindrique.

De préférence, lesdits moyens pour le passage du liquide comprennent une pluralité d'orifices et/ou de cheminées.

De manière avantageuse, lesdites cheminées sont en saillie dans la partie supérieure dudit plateau et/ou dans la partie inférieure dudit plateau.

Selon un aspect de l'invention, ledit plateau comporte une pluralité de moyens de passage du liquide uniformément répartis sur ledit plateau.

En outre, l'invention concerne une colonne d'échange de chaleur et/ou de matière entre un gaz et un liquide, dans laquelle les deux fluides sont mis en contact au moyen d'un garnissage. Ladite colonne comporte au moins un plateau distributeur selon l'invention pour distribuer lesdits fluides sur ledit garnissage.

De plus, l'invention concerne une utilisation d'une colonne selon l'invention, pour un procédé de traitement de gaz, de captage du CO₂, de distillation, de déshydratation ou de transformation de l'air.

### Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.
La figure 1, déjà décrite, illustre le cas particulier d'une tête de colonne de traitement de gaz ou de capture de CO₂ équipée d'un plateau distributeur.
La figure 2, déjà décrite, illustre un plateau distributeur selon l'art antérieur.
La figure 3, déjà décrite, illustre un contacteur de type plateau selon l'art antérieur.
La figure 4 illustre un plateau distributeur selon un mode de réalisation de l'invention.
Les figures 5a à 5e représentent une portion d'un plateau distributeur selon plusieurs variantes de réalisation de l'invention.

### Description détaillée de l'invention

La présente invention concerne un plateau distributeur pour colonne d'échange de chaleur et/ou de matière entre un gaz et un liquide, comprenant classiquement au moins un moyen pour le passage de gaz à travers le plateau, tel qu'un caisson en saillie sur la partie supérieure du plateau, au moins un moyen pour le passage du liquide à travers le plateau. Le plateau distributeur permet de former une garde de liquide sur sa surface supérieure, c'est-à-dire une hauteur de liquide située sur la face supérieure du plateau. Les caissons sont en saillie sur la partie supérieure du plateau (orientés vers le haut de la colonne). Le plateau distributeur selon l'invention est adapté pour des écoulements à contre-courant dans la colonne d'échange de chaleur et/ou de matière, le gaz montant à travers les caissons et le liquide descendant à travers les cheminées et les moyens de répartition. Classiquement, le plateau distributeur/échangeur est sensiblement cylindrique.

Selon l'invention, au moins un caisson comprend des moyens de bullage du gaz. Avantageusement, tous les caissons comprennent des moyens de bullage du gaz, de manière à augmenter les échanges de chaleur et/ou de matière entre les fluides. Alternativement, seulement certains caissons comprennent des moyens de bullage du gaz, de manière à optimiser le compromis échange/engorgement. Un moyen de bullage du gaz permet, lorsqu'il est traversé par le gaz, de former des bulles de gaz dans la garde de liquide sur la surface supérieure du plateau, ce qui génère une zone d'émulsion, dans laquelle le transfert de matière et/ou de chaleur entre le liquide et le gaz, sous forme de bulles, peut avoir lieu. De cette manière, la hauteur utile du plateau contribue également à l'échange de chaleur et/ou de matière, en addition des échanges réalisés dans le contacteur. Ainsi, le système de distribution ne constitue pas de « perte de hauteur » au niveau de l'efficacité de la colonne. Une colonne contenant un tel plateau distributeur peut donc être de hauteur réduite, ce qui permet une diminution du coût de la colonne.

De préférence, les moyens de bullage du gaz sont situés dans la partie supérieure des caissons, notamment sur la paroi supérieure horizontale des caissons. Le moyen de bullage du gaz peut comprendre un clapet, dont l'ouverture génère des bulles de gaz. L'ouverture du clapet est réalisée par la pression du gaz. Le clapet peut comprendre une pièce mobile en rotation autour d'un axe. Alternativement, le clapet peut comprendre une pièce en translation verticale par rapport au plateau. Selon un autre mode de réalisation, le moyen de bullage du gaz peut comprendre des fentes dans le caisson. Alternativement, le plateau comporte une pluralité de moyens de bullage comprenant à la fois au moins un clapet et au moins une fente. Avantageusement, les fentes peuvent avoir une forme et/ou des dimensions adaptées pour former directement des bulles, pour minimiser la perte de charge et pour limiter le pleurage (liquide qui s'écoule dans le caisson). Les fentes peuvent avoir différentes formes : rectangulaire, circulaire, elliptique, triangulaire... Afin d'augmenter la formation de bulles, les fentes peuvent être couvertes par un chapeau disposé au-dessus de la fente, et surélevé par rapport au caisson. Le chapeau peut permettre également d'éviter que le liquide ne pénètre dans le caisson.

Le caisson pour le passage du gaz permet, pour une colonne fonctionnant à contre-courant, le passage du gaz du dessous vers le dessus du plateau. Avantageusement, le caisson pour le passage du gaz a une forme sensiblement parallélépipédique, de manière à offrir une large ouverture au passage du gaz, ce qui permet de limiter les pertes de charge. De plus, lorsque le plateau distributeur comporte plusieurs caissons pour le passage du gaz, ceux-ci peuvent être disposés parallèlement les uns par rapport aux autres. Les caissons pour le passage du gaz sont équipés d'un système de bullage.

Contrairement au cas où les moyens de bullage seraient directement au niveau du plateau, la saillie des caissons par rapport au plateau (et donc des moyens de bullage) permet d'éviter de perturber la distribution et l'écoulement du liquide, ce qui favorise une distribution uniforme du liquide.

Les caissons sont adaptés à être immergés, c'est-à-dire qu'ils ont une hauteur inférieure à la hauteur de la garde de liquide prévue sur la surface supérieure du plateau. Ainsi, le gaz, sous forme de bulle, est injecté dans le liquide.

Les moyens pour le passage du liquide permettent le passage du liquide du dessus du plateau vers le dessous. Selon un mode de réalisation de l'invention, les moyens pour le passage du liquide à travers le plateau sont composés d'un ensemble de cheminées pouvant être en saillie du côté supérieur du plateau et/ou du côté inférieur du plateau. Les cheminées peuvent être sensiblement cylindriques. Selon un autre mode de réalisation de l'invention, les moyens de passage du liquide à travers le plateau sont composés d'un ensemble d'orifices réalisés dans le plateau. Selon un autre exemple de réalisation de l'invention, les moyens pour le passage du liquide à travers le plateau comportent à la fois des cheminés et des orifices. Ces moyens pour le passage du liquide sont disposés entre les caissons pour le passage du gaz. Le nombre de moyens pour le passage du liquide est avantageusement supérieur au nombre de caissons pour le passage du gaz. Le pas des moyens pour le passage du liquide peut être triangulaire ou carré. Afin de réaliser une bonne distribution du liquide et une bonne répartition du liquide sur le contacteur (garnissage), les moyens pour le passage du liquide sont uniformément répartis sur le plateau, c'est-à-dire situés sur la totalité de la surface du plateau, entre les caissons.

Les moyens pour le passage du liquide permettent, en fonctionnement normal, un débit de liquide suffisant assurant une garde de liquide sur le plateau supérieure à la hauteur des caissons.

La figure 4 illustre un premier mode de réalisation d'un plateau distributeur/échangeur selon l'invention. La figure 4 est une vue en coupe d'une portion du plateau distributeur/échangeur.

Le premier mode de réalisation de l'invention concerne un plateau distributeur/échangeur 2 pour colonne d'échange de chaleur et/ou de matière entre un gaz et un liquide, comprenant classiquement au moins un caisson 4 pour le passage de gaz à travers le plateau, au moins un moyen de bullage du gaz et au moins un système de distribution du liquide 14. Selon l'exemple non limitatif de la figure 4, le moyen de bullage de gaz peut être un clapet 15 permettant de créer une zone d'émulsion LG dans la garde de liquide, et permettant donc des échanges entre les fluides sur la partie supérieure du plateau. Toutefois, le moyen de bullage peut être réalisé par d'autres moyens, tels que ceux décrits précédemment. Le plateau distributeur 2 permet de former une garde de liquide sur sa zone basse, d'une hauteur L1.

Selon l'exemple non limitatif de la figure 4, le moyen pour le passage du liquide est une cheminée 14 en saillie sur la partie inférieure du plateau. Toutefois, le moyen pour le passage du liquide peut être réalisé par d'autres moyens, notamment par des orifices situés dans le plateau 2..

Pour ce mode de réalisation, le caisson 4 et le système de bullage 5 sont en saillie sur la partie supérieure du plateau 2 (orientés vers le haut de la colonne), alors que le système de distribution de liquide 14 est en saillie sur la partie inférieure du plateau 2 (orienté vers le bas de la colonne).

Le caisson 4 et les moyens de bullage 15 du gaz permettent, pour une colonne fonctionnant à contre-courant, le passage du gaz du dessous vers le dessus du plateau. Avantageusement, le caisson pour le passage du gaz 4 a une forme sensiblement parallélépipédique sur lequel sont disposés les moyens de bullage 15 du gaz.

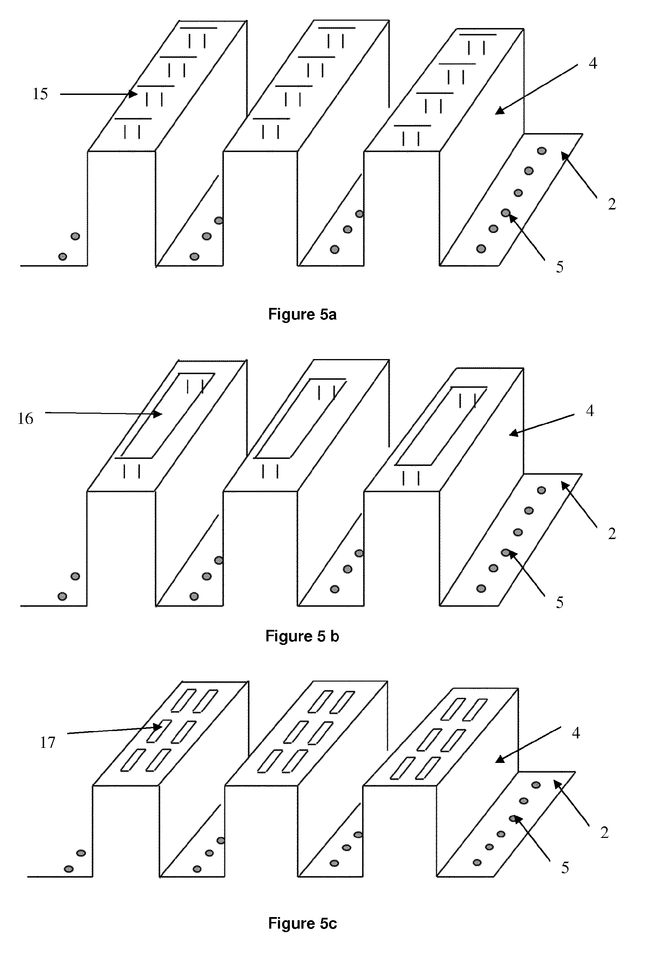

Les figures 5a à 5e représentent de manière non limitative et non exhaustive cinq variantes de réalisation d'un plateau distributeur/échangeur selon l'invention. Les figures 5a à 5e sont des vues en coupe d'une portion de plateau distributeur/échangeur.

Pour ces variantes de réalisation, les moyens pour le passage du liquide sont des orifices 5 situés dans le plateau 2. Toutefois, ces variantes de réalisation peuvent être combinées avec d'autres réalisations des moyens pour le passage du liquide, par exemple ceux décrits précédemment ; les moyens pour le passage du liquide peuvent notamment être des cheminées.

Tels qu'illustrés, les caissons 4 ont une forme sensiblement parallélépipédiques. Toutefois, ces variantes de réalisation peuvent être adaptées également à d'autres formes de caissons : cylindriques, cubiques, hexaédriques...

Selon la variante de réalisation de la figure 5a, les moyens de bullage du gaz consistent en une série de clapets 15 cylindriques disposés sur chaque caisson. De préférence, les clapets 15 peuvent être uniformément répartis sur le caisson. Alternativement, les clapets peuvent avoir d'autres formes, notamment rectangulaire. De plus, chaque caisson peut comprendre un seul clapet 15.

Selon la variante de réalisation de la figure 5b, les moyens de bullage du gaz se présentent sous une forme de fente parallélépipédique sensiblement de la longueur d'un caisson gaz. Tel qu'illustrée, la fente peut être recouverte d'un chapeau 16, qui est surélevé par rapport au caisson. Le chapeau 16 contribue à la formation des bulles de gaz.

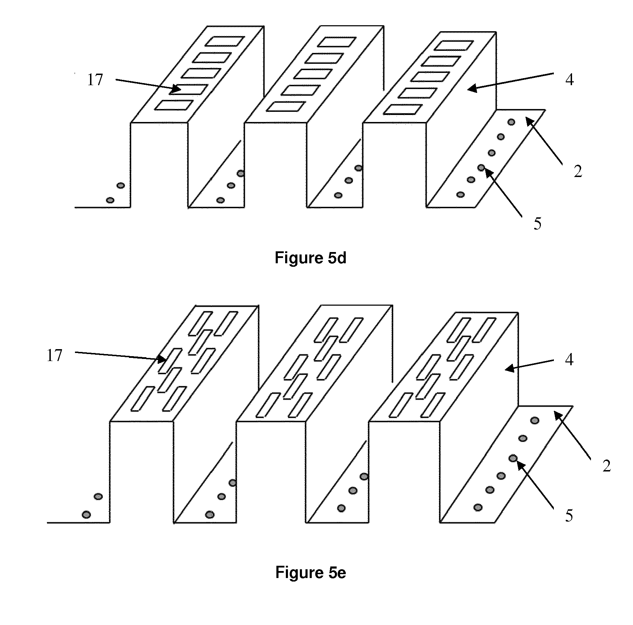

Selon les variantes de réalisation des figures 5c, 5d et 5e, les moyens de bullage du gaz se présentent sous la forme d'une pluralité de fentes 17 rectangulaires. Pour la variante de réalisation de la figure 5c, les fentes 17 sont agencées le long de la direction principale (direction longitudinale) du caisson 4. Tel qu'illustré de manière non limitative, chaque caisson 4 peut comporter une pluralité de séries de plusieurs fentes 17. Pour la variante de réalisation de la figure 5d, les fentes 17 sont agencées perpendiculairement à la direction principale (direction longitudinale) du caisson 4. Chaque caisson 4 peut comporter une pluralité de séries de plusieurs fentes 17. Dans le mode de réalisation de la figure 5e, les fentes 17 sont agencées sous forme de plusieurs séries disposées en quinconce. Les fentes 17 sont disposées dans la direction principale du caisson 4.

Ces exemples ne sont pas exhaustifs ; d'autres possibilités d'implémentation des moyens de bullage du gaz peuvent être envisagées.

L'invention concerne également une colonne d'échange de matière et/ou de chaleur entre deux fluides, dans laquelle deux fluides sont mis en contact au moyen d'au moins un contacteur gaz/liquide, la colonne comprenant au moins une première entrée d'un fluide liquide, au moins une deuxième entrée d'un fluide gazeux, au moins une première sortie d'un fluide gazeux et au moins une deuxième sortie d'un fluide liquide. La colonne comporte en outre au moins un plateau distributeur/échangeur tel que décrit ci-dessus, pour permettre la distribution des fluides sur le contacteur.

De préférence, la colonne comporte plusieurs sections comprenant un contacteur, un plateau distributeur tel que décrit ci-dessus étant disposé dans chaque section.

La hauteur utile de chaque plateau contribuant également à l'échange de chaleur et/ou de matière, en addition des échanges réalisés dans le contacteur, la colonne d'échange ne comprend pas de « perte de hauteur » au niveau de l'efficacité de la colonne. Une colonne contenant un tel plateau distributeur peut donc être moins haute, ce qui permet un encombrement réduit et une diminution du coût de la colonne.

De manière avantageuse, le contacteur gaz/liquide est un lit de garnissage structuré. Alternativement, le contacteur gaz/liquide est un lit de garnissage vrac.

De préférence, le gaz et le liquide s'écoulent dans la colonne à contre-courant.

La colonne selon l'invention peut être utilisée dans des procédés de traitement de gaz, de captage de CO₂ (par exemple par lavage aux amines), de distillation, de déshydratation, ou de transformation de l'air... De plus, l'invention peut être utilisée avec tout type de solvant.

### Exemple :

Pour illustrer les avantages de la présente invention, on se propose de comparer les résultats obtenus par colonne d'absorption équipée de la présente invention à ceux obtenus par une colonne selon l'art antérieur. Il s'agit d'un cas de désacidification du composé acide CO₂ d'un gaz naturel pour atteindre une spécification cible (spec) de 2% en sortie de l'absorbeur. Le procédé met en oeuvre un solvant amine de type Methyl diethanolamine (MDEA) 40% en poids, dans une colonne d'absorption réactive équipée de garnissage structuré et plateau distributeur/collecteur des phase gazeuse (gaz naturel) et liquide (solvant). Les propriétés des colonnes d'absorption selon l'invention et selon l'art antérieur sont décrites ci-après :

Propriété de la colonne selon l'art antérieur :
- Nombre de plateau collecteur/distributeur selon l'art antérieur: 5
- Hauteur des plateaux collecteur/distributeur : 1 m
- Nombre de lit de garnissage structuré : 4
- Aire effective du garnissage : 250 m²/m³
- Hauteur par lit : 8 m
- Débit de solvant : QL=46 m³/m²/h
- Débit de gaz : Fs = 2 (m/s) (kg/m³)^{0.5}
- Pression : 40 bars
- Température : 40°C
- Concentration de CO₂ de la charge en entrée : 8%

Propriété de la colonne selon l'invention:
- Nombre de plateau collecteur/distributeur-échangeur selon l'invention: 5
- Hauteur des plateaux collecteur/distributeur : 1 m
- Nombre de lit de garnissage structuré : 4
- Aire effective du garnissage : 250 m²/m³
- Hauteur par lit : 8 m
- Débit de solvant : QL=46 m³/m²/h
- Débit de gaz : Fs = 2 (m/s) (kg/m³)^{0.5}
- Pression : 40 bars
- Température : 40°C
- Concentration de CO₂ dans la charge en entrée : 8%

Les performances obtenues sont présentées dans le tableau 1. Dans ce dernier, l'évolution de la concentration du CO₂ dans la charge à différent étage de la colonne est présentée. Un étage correspond à une hauteur de colonne intégrant un lit de garnissage et un plateau distributeur. Les résultats montrent que l'utilisation de plateaux collecteur-distributeur-échangeur selon l'invention permet une meilleure efficacité de transfert dans la colonne d'absorption. En effet, avec la présente invention, la spécification est atteinte au bout d'une moindre hauteur par rapport à une colonne classique. La colonne d'absorption équipée de plateau collecteur/distributeur/échangeur permet ainsi un gain significatif en hauteur de colonne, d'environ 6 m, soit une diminution d'environ 15% sur la hauteur totale de l'absorbeur.

**Tableau 1 : Performances**

| Hauteur de colonne | entrée | Etage 1 | Etage 2 | Etage 3 | Etage 4 |
|---|---|---|---|---|---|
| CO₂ % (art antérieur) | 8.0 | 4.4 | 3.3 | 2.6 | 2.0 |
| CO₂ % (selon l'invention) | 8.0 | 3.7 | 2.9 | 2.2 | 1.6 |

## Revendications

1. Plateau distributeur pour colonne d'échange de chaleur et/ou de matière entre un gaz et un liquide comportant au moins un caisson (4) en saillie sur la partie supérieure dudit plateau (2) pour le passage dudit gaz à travers ledit plateau et au moins un moyen pour le passage dudit liquide (5, 14) à travers ledit plateau (2), **caractérisé en ce que** ledit caisson (4) comporte au moins un moyen de bullage (15, 16, 17) dudit gaz.

2. Plateau selon la revendication 1, dans lequel ledit caisson (4) est sensiblement parallélépipédique.

3. Plateau selon l'une des revendications précédentes, dans lequel ledit moyen de bullage comporte au moins un clapet (15) et/ou une fente (17) dudit caisson.

4. Plateau selon la revendication 3, dans lequel ladite fente (16, 17) a sensiblement une forme rectangulaire.

5. Plateau selon les revendications 3 et 4, dans lequel la direction longitudinale de ladite fente (17) est sensiblement perpendiculaire à la direction longitudinale dudit caisson (4).

6. Plateau selon les revendications 3 et 4, dans lequel la direction longitudinale de ladite fente (17) est sensiblement parallèle à la direction longitudinale dudit caisson (4).

7. Plateau selon l'une des revendications 3 à 6, dans lequel ladite fente (17) est recouverte d'un chapeau (16).

8. Plateau selon la revendication 3, dans lequel ledit clapet (15) est sensiblement rectangulaire.

9. Plateau selon la revendication 3, dans lequel ledit clapet (15) est sensiblement cylindrique.

10. Plateau selon l'une des revendications précédentes, dans lequel lesdits moyens pour le passage du liquide comprennent une pluralité d'orifices (5) et/ou de cheminées (14).

11. Plateau selon la revendication 10, dans lequel lesdites cheminées (14) sont en saillie dans la partie supérieure dudit plateau et/ou dans la partie inférieure dudit plateau.

12. Plateau selon l'une des revendications précédentes, dans lequel ledit plateau comporte une pluralité de moyens de passage du liquide (5, 14) uniformément répartis sur ledit plateau (2).

13. Colonne d'échange de chaleur et/ou de matière entre un gaz et un liquide, dans laquelle les deux fluides sont mis en contact au moyen d'un garnissage (3), **caractérisé en ce que** ladite colonne comporte au moins un plateau distributeur (2) selon l'une des revendications précédentes pour distribuer lesdits fluides sur ledit garnissage (3).

14. Utilisation d'une colonne selon la revendication 13, pour un procédé de traitement de gaz, de captage du CO₂, de distillation, de déshydratation ou de transformation de l'air.
